Europäisches Patentamt

European Patent Office

Office européen des brevets

(11) Publication number: **0 083 126**
**B1**

## EUROPEAN PATENT SPECIFICATION

(45) Date of publication of patent specification: **28.05.86**

(21) Application number: **82201591.3**

(22) Date of filing: **14.12.82**

(51) Int. Cl.⁴: **D 01 F 4/00,** A 22 C 13/00,
C 08 L 89/06

(54) A process of preparing shaped products starting from dispersions containing a coagulable amphoteric high molecular substance.

(30) Priority: **30.12.81 NL 8105898**

(43) Date of publication of application:
**06.07.83 Bulletin 83/27**

(45) Publication of the grant of the patent:
**28.05.86 Bulletin 86/22**

(84) Designated Contracting States:
**AT BE CH DE FR GB IT LI LU NL SE**

(56) References cited:
**BE-A- 726 054**
**GB-A- 968 840**
**US-A-2 852 812**
**US-A-3 620 775**
**US-A-3 932 677**

**CHEMICAL ABSTRACTS, vol. 92, no. 12, 24th March 1980, page 70, no. 95642x, Columbus Ohio (USA); J. BULACOVACHI et al.: "Studies on the manufacture and characterization of films from collagen solutions"**

(73) Proprietor: **Vaessen-Schoemaker Holding B.V.**
**Zweedsestraat 61006**
**NL-7418 BB Deventer (NL)**

(72) Inventor: **Ariens, E.J., Prof. Dr.**
**Groenewoudseweg 45**
**NL-6524 TP Nijmegen (NL)**

(74) Representative: **van den Berg, Christiaan C.T., Ir.**
**c/o Vaessen-Schoemaker Holding B.V. P.O. Box 50**
**NL-7400 AB Deventer (NL) .**

Courier Press, Leamington Spa, England.

**Description**

The invention relates to a process of preparing shaped products starting from dispersions which contain at least one coagulable amphoteric high molecular substance by passing such a dispersion through an extruder equipped with a die into a coagulating bath, optionally provided with electrodes whereby coagulation of the dispersion is effected by a change in pH such that the isoelectric point of the high molecular substance is passed.

The shaped products prepared according to the invention such as threads, yarns, sheets, films, hollow and particularly also thin-walled cylinders may find application in many fields, particularly as packaging material, as aids in the medical field, membranes, including permselective membranes, and colour filters.

A very large field of application is the packaging of foodstuffs, which in most countries is subject to special and sometimes very stringent regulations.

The known films of regenerated cellulose were found to be useful for many purposes in the foodstuffs industry. Their use even included the packaging of a sausage mass, in which case special requirements are to be satisfied because of the direct contact between the sausage mass and the sausage casing. Thus, cylindrical casings of regenerated cellulose were used for large sausages, such as bolognas, salamis and the like, in which case the sausage casing is removed from the sausage prior to human consumption. The regenerated cellulose is also widely applied in the preparation of frankfurter sausages wherein the casing is stuffed with meat emulsion, and subsequently linked, smoked and cooked. The cellulose films, however, were not found satisfactory for the processing of pork sausage, especially in that they do not transmit the fat which is released from the sausage during cooking and, moreover, they were indigestible.

In the past animal intestines formed a unique packaging for sausages, and later developments using collagen, a major constituent of intestines, were therefore directed to the technical preparation of collagen films whose properties closely resembled those of natural intestines. However, collagen casings treated with aluminium salts and subjected to the action of aldehyde were, because of their indigestibility, only found to be of use if the skin was removed prior to human consumption. Nor did casings prepared from alginates, amylose or casein turn out to be suitable in the long run.

It is with a view to the above that the present invention was first of all developed for the benefit of the meat products industry, considering the particularly high demands made in this field of application and is particularly useful for sausage casings. The films or sheets prepared according to the process of the invention, of course, also lend themselves to use in other fields, particularly in medicine, not only in the form of films but also as threads of tapes.

The invention relates to a process of preparing shaped products starting from dispersions which contain at least one coagulable amphoteric high molecular substance by passing such a dispersion through an extruder equipped with a die into a coagulating bath and coagulating said dispersion by a change in pH such that the isoelectric point of the high molecular substance is passed, characterized in that polyvalent ions are added to the dispersion in such amounts that the final concentration in the dispersion is at least 0.005 molar of polyvalent ions.

The invention will be particularly described by reference to the shaping of a collagen containing dispersion, optionally combined with other materials that are shapable or not. The invention also relates to the preparation of shaped products from other materials, particularly proteins asuch as casein, alginates, pectins, and, in short, all those starting materials which prior to their being shaped form part of an electrolyte containing shaping mass. Collagen itself is not only prepared from offal of intestines but also from other materials, particularly skins, tendons and like animal material.

In the past there was at first the stringent requirement which only permitted the use of non-limed source material for the preparation of collagen suitable for sausage casings and this practice is still preferred by many experts. US-patent 3.620.775 divulges the use of limed source material. However, according to the said patent the use of limed hides is only possible provided that the limed hides are squeezed to remove excess liming liquor, the corium layer or split is washed out and the line residues are solubilized into a salt which is thoroughly washed out.

The dispersion fed to the extruder preferably contains 2—6% of collagen and has a pH of 2,5—6,5.

Extrusion is followed by washing, tanning and drying. The dispersion to be extruded may also contain ingredients, which serve to improve dimensional stability, practical use, colour or other properties of the shaped product or even obviate the need for some aftertreatment. For instance, prior to extrusion cross-linking agents such as glyoxal or other mono- or dialdehydes were preferably added to the collagen dispersion.

Occasionally also regenerated cellulose, acrylic esters, polyvinylidene chloride, casein and fibres were incorporated into the collagen paste.

After extrusion the paste or gel is passed through an appropriate die into one or more treatment baths in order to acquire some particularly desired dimensional stability. As a rule, use is made of dehydrating or tanning baths. The use has been proposed of highly concentrated solutions of inorganic salts, such as ammonium sulphate or sodium sulphate, alum solutions, solutions of aluminium salts, aldehyde solutions, but also ethanol or acetone or other organic solvents.

The hollow cylinders, such as sausage casings obtained upon extrusion, are inflated to maintain their shape by feeding air into the interior, which is closed at its end.

Collagen products, including sausage casings, also have been obtained by electrophoresis. In that case dilute collagen dispersions are fed into a direct current field, a collagen containing coating being deposited on at least one of the electrodes. The coating formed on the electrode is subsequently stripped from the electrode. Also a continuous removal from the electrode has been described. In that process the electrodes consequently constitute the shaping and hence the shape determining elements. It has also been practised to place a membrane of an ion-exchanging character between the anode and the cathode (permselective), i.e. in such a manner that the particles of the dispersion deposit on the membrane.

To the dispersions intended for electrolysis there have also been added components known to be used in the art of extrusion, such as cross-linking agents, plasticizers, formalin, alum, fibrous materials, etc. The pH of the dispersions was about 2—4 or also 10—13, depending on whether deposition on the cathode or the anode was required.

In the shaping by electrolysis the major and very awkward difficulties met are the continuous removal from the electrode or the membrane, the continually required cleaning of the shaping elements, the development of gas at the electrodes, the occurrence of pin holes and other defects in the shaped casing.

The present invention is based on the idea that by an appropriate choice of the process parameters the ion transport, which causes the dispersion to change into film, may be reduced to a minimum. The idea is novel and in fact leads to accelerating and enhancing the syneresis of the dispersion, which is in contrast with the methods that have been used so far, where first of all the source material and stiffening methods were to be directed to a fastest possible dehydration of the extruded product.

With the system according to the invention the use of chemicals and the formation of wastes are reduced to a minimum. It also permits simplifying the aftertreatment of film or other shaped product obtained.

In this connection mention may be made, for example, of coagulable proteins, which have an amphoteric character, are swellable in water or aqueous liquids and upon comminution are dispersible in water.

After formation of the dispersion the mass is passed through an extruder provided with a shaping die and the resulting product is passed into a coagulation bath having such a hydrogen ions or hydroxyl ions concentration as will cause the protein to be isolated upon passage of the isoelectric point. These considerations apply to all extrudable compositions with which high molecular amphoteric organic material, when dispersed in an electrolyte containing aqueous medium, will upon a change in its state of charge assume the nondispersible form, which is practically insoluble in an aqueous medium.

The system will be further explained with reference to collagen.

Collagen pastes having a collagen content of 2—6% by weight, with the collagen being dispersed in an aqueous medium, are known in themselves. In the preparation of these pastes it has up to now been considered necessary for any calcium ion present to be thoroughly removed. At first even only collagen was processed that had been prepared from animal skin, but care had to be taken not to apply liming, which is a normal pretreatment for instance for removing the hair. As already described hereinbefore later on use was also made of limed skins, provided that they had been specially treated to remove the calcium ions.

Prior to extrusion according to the invention, however, it is preferred that a polyvalent ion should be introduced into the collagen dispersion in such an amount that the final concentration in the dispersion is at least 0.005 molar of polyvalent ion. It has been found contrary to the prior art that the calcium ion had a very favourable effect. For the coagulation, however, no use must be made of the known dehydrating baths. For normal pastes having a pH of 3 use must be made of an alkaline solution, for example of 0.01—0.1 N, which at most contains small amounts of non-dehydrating salt. Syneresis is promoted by the polyvalent ion, which in this case is a calcium ion. Experiments have clearly demonstrated that calcium ion which might be present in the coagulation bath is not capable at all of replacing the effect of ion contained in the paste.

In a preferred embodiment of the present invention a further increase in speed of film production could be obtained by incorporating into the acid dispersion (pH=about 3) a cross-linking agent for the coagulable, amphoteric high molecular substance which is inactive in the dispersion but active during coagulation. Glyoxal was found to have a particular favourable effect.

The simultaneous presence of glyoxal and calcium ions was found to result in the non-occurrence of swelling of the protein, which normally takes place at a high pH and inhibits penetration of a dehydrating coagulation agent and, hence, has a retarding effect.

It has further been found that application of an electric direct current field perpendicular to the film and immediately upon shaping results in the formation of a film of good quality (without pin holes, cracks and the like) at considerably higher take off speeds. In the case of conventional pastes such an application of an electric field to increase the rate of penetration of the $OH^-$-ions is of no use in that it would be attended with the formation in such a field of a bipolar membrane, which stops the hydroxyl ions. This appears for instance from the fact that it causes the voltage drop across the membrane to increase considerably. The calcium ion in the composition proposed here prevents the build of a bipolar membrane, which acts as a barrier against the electric direct current.

Extrusion is preferably carried out in vertically upward direction, the extruder head being provided with a forming element directly emptying into an alkaline bath, for example of 1.0 N NaOH.

It was found that in that way the coagulation speed was so high that even the smallest interruption or technical trouble caused the die to get clogged and the production process to be discontinued. Although this difficulty did not always necessitate taking any special steps, it was considered advisable to make some provision to prevent such clogging, particularly if the process was to be speeded up with electric current. To that end a liquid seal was provided which separated the extruder die from the coagulation liquid. As examples of suitable liquid may be mentioned: 1,1,1 - trichloroethane, mixtures of perchloroethylene and heptane and chloroform. The liquids must, of course, be inert to both the coagulation bath and the product to be formed, immiscible with and have a specific gravity higher than that of the liquid of the coagulation bath and not react with it. Even if no electric current is used, this liquid seal permits building in a retardation in the coagulation system, allowing the use of such steps as elongation.

When shaping hollow cylinders the cylinder could be inflated with an air stream during and after shaping in a manner known per se in order to prevent the inner wall from sticking together and to facilitate subjecting the cylinders to further treatments. The air may be fed to the inside of the cylinder through some hollow extruder shaft or in any other convenient way. To this air or other gas ammonium may be added at the same time to effect neutralization. If the sodium hydroxide bath is maintained on the outside of the cylinder, then it also may act as a controlled and adequate means of cooling the cylinder exposed to heat of neutralization. For neutralization, ammonia gas may, of course, also be used both inside and outside the cylinder.

The preparation of the collagen dispersion may for example be carried out as follows:

Salt-cured hides are soaked in water, leached, dehaired with lime and sodium sulphide and washed. Subsequently, the hide is split on both sides to obtain a suitable collagen source, referred to as corium split, for the dispersion to be prepared.

The intermediate split is subjected to a light deliming treatment, desulphurized by washing with hydrochloric acid in a hide washer, use being made of, for example, 0.02 N hydrochloric acid, 200% moisture on the hides, at a temperature of 20°C. The hides, after being drained, are cut up into approximately square pieces about 5 to 10 cm on a side.

The split is brought to equilibrium by leaving it in contact with dilute acid, which is preferably kept at a constant pH level of 3, for about 2 to 5 days. It is preferred that the acid used should be an inorganic acid such as hydrochloric acid or sulphuric acid. The contacting time varies with the quality of the hides, the temperature being about 25°C or lower.

The resulting conditioned split is roughly ground on a cutter in the presence of hydrochloric acid or sulphuric acid at a pH of 3, after which the material is kneaded, deaerated and pulverized. During these steps the temperature is kept below 30°C. In this way a concentrate is obtained having a collagen content of for example 8—12%.

This strong concentrate is mixed and kneaded in the presence of acid (preferably hydrochloric acid) having a pH of 3, which contains calcium salt and glyoxal in amounts such that the final concentration in the working dispersion is 0.005 to 0.100 molar of $Ca^{2+}$-ions and contains 0.005 to 0.50% of glyoxal.

If desired, this process step may include the use of plasticizers, colourants and other additives. The temperature is kept below 30°C.

Subsequently, the dispersion is homogenized, for instance with a Nanton-Gaulin homogenizer, at a pressure drop of 100 bar and passed through a bar filter having 100 microns clearance.

The resulting paste is generally resistant to storage longer than 6 months. It may be desirable to allow the paste to mature for some time to obtain the desired processability.

The simultaneous presence of a polyvalent ion, such as calcium ion, and a crosslinking agent, such as glyoxal, offers surprising advantages.

As a rule, pH values for the collagen of 10 to 11 and higher are avoided. This has to do with the charge swelling of the protein as a result of negative charging. This swelling considerably inhibits dewatering. Moreover, rapid penetration of $OH^-$-ions at a high pH is hindered by the formation of bipolar ion-selective membrane structures, which constitute a barrier against ion penetration.

The use of a cross-linking agent leads to a higher initial strength immediately upon extrusion. In this connection the use of dialdehydes was found to be very effective in that they were practically inactive in the acid medium of the paste and very rapidly turned active of from a pH of about 12.

The polyvalent ion counteracts the formation of an ion-selective membrane and reduces swelling, as a result of which the rate of coagulation is considerably increased.

The invention will be further illustrated in but not limited by the following examples.

Example 1

In the manner described hereinbefore four pastes were prepared which are referred to, respectively, as A, B, C and D, which all contained 3% of collagen and were swollen with hydrochloric acid at a pH of 3.

As far as the added substances were concerned the dispersion differed as follows:

A no additive;
B 0.05 M of calcium chloride;
C 0.2% by weight of glyoxal;
D 0.05 M of calcium chloride and 0.2% by weight of glyoxal.

The dispersions were evaluated for their behaviour with respect to 0.1 N sodium hydroxide after thorough mixing with the additives. To 10 g of dispersion there were added 10 ml of sodium hydroxide followed by thorough mixing.

The results were as follows:

A strong swelling, transparent, slack;
B less strong swelling, somewhat stringy, less transparent, still not quite firm;
C strong swelling, transparent, firm lumps of gel;
D strong and rapid dewatering, firm and great white flakes.

From these results the following may be concluded:

1. The high pH leads to strong negative charging (paste A).
2. Dewatering, despite of high pH (paste B).
3. Firm, despite of high pH (cross-linking paste C).
4. Both dewatering and cross-linking (paste D).

Example 2
Building up a barrier.

The paste A according to Example 1, after being coloured with methyl red as indicator, was extruded to form three membranes which were each supported between polyester gauzes. The membranes has a wet thickness of 0.7 mm.

The membrane 1 was placed in a bath of dilute lime water having a specific resistance of 700 Ohm cm and a pH of about 11. Immediately upon placing the membrane in the bath a constant direct current having a density of 27 mA/cm$^2$ was passed perpendicularly through the membrane. The duration of current passage needed to get a completely penetrated membrane was 130 seconds. During the first 10 seconds the voltage across the membrane increased to 145 V (field strength over 2000 V/cm on average) to subsequently slowly decrease to 10 V after 100 seconds. After that the current remained constant.

The extremely high field strength is due to the build up of the barrier.

The experiment was repeated with the membrane 2 under otherwise the same conditions but with an alternating current density at a frequency of 50 cycles per second.

The voltage across the membrane remained at a constant value of 5 V. After finishing the experiment there was no sign of neutralization. In the alternating current field there was no build up of a barrier, but there was no net OH$^-$ transport either.

On membrane 3 first the pH of the bath liquid was decreased by adding hydrochloric acid. Use was made again here of a direct current having a density of 27 mA/cm$^2$, which was passed through over a period of 130 seconds. The pH of the bath liquid was 5.5. On that occasion the voltage across the membrane showed no peak but slowly increased from 10 V to 20 V. After finishing the experiment there was no signs of neutralization. There was no formation of a barrier because no negative structure could be formed: the pH is here on the same side of the isoelectric point.

When the experiments were repeated using a bath of sodium hydroxide having a pH of 11, the symptoms were identical with those that were found when use was made of lime water. To obtain neutralization and to prevent the build up of a barrier the calcium ions must therefore be contained in the paste and not in the bath.

Example 3

Pastes having collagen contents of 2, 4 and 6% by weight and containing different amounts of calcium chloride and glyoxal, were extruded into a 1.0 N sodium hydroxide bath.

The pH of the paste was 3 in all cases. The resulting membranes were evaluated for coherency and strength immediately after coagulation.

By the results obtained it could be established that as far as the collagen content was concerned technically suitable films could be formed from all three compositions. It was necessary, however, for the two other constituents to be adapted thereto. The optimum effect was obtained here using a paste composition containing 0.01 to 0.2 M calcium ions and 0.05—0.5% glyoxal. A minimum content of 0.005 M calcium ions and of 0.02% by weight of glyoxal was found to be required. Upon exceeding the upper limit the effect gradually decreased.

Example 4
Influence of electric direct current.

The paste was extruded vertically upwards into a 1.0 N NaOH bath. Above the point where the extrusion die enters into the NaOH bath there is a liquid seal consisting of a layer of trichloroethane. The temperature of the alkaline bath is kept at 20°C. On either side of the extruded film is an electrode. The distance between the electrodes is 27 mm. Via these electrodes an electric voltage field may be applied to the formed film. The strength of the membrane can be determined by bombarding it with hydraulic pulses, which is carried out as follows:

Via a plunger metering pump a fixed amount of water is passed through a narrow tubular opening of a No. 3 pulse head. The peak pressure which occurs in the pulsator before the pulse head appears to be determinative for the strength of the hydraulic pulses. Bombarding is done from a point immediately above the surface of the coagulation liquid.

The peak pulse pressure being just not high enough to bombard holes into the membrane is used as a test criterion.

The following compositions have been tested:

A) 0.05 M $CaCl_2$ and 0.1% glyoxal;
B) 0.02 M $CaCl_2$ and 0.2% glyoxal.

The two compositions contain 4% by weight of collagen and HCl solution of pH value 3.

The test pulse is set to a peak pressure of 1.2 bar and subsequently the extrusion speed limit is determined at which in the absence of current no holes are bombarded into the membrane. This taking off speed $v_0$ is 2.5 m/min for composition A and 2.3 m/min for composition B. Next, the taking off speed is increased, as a result of which holes are bombarded into the membrane.

Voltage is applied to the electrodes and the current density is again increased to a value just not high enough to result in the formation of holes.

The extrusion speed is again increased and the procedure repeated. The ratio $v/v_0$ is a measure of the acceleration of the process.

| Composition | Voltage across membrane (V) | Current density $(A/cm^2)$ | $v : v_0$ |
|---|---|---|---|
| A | 0 | 0 | |
| A | n.m. | 0.1 | 1.12 |
| A | n.m. | 0.2 | 1.30 |
| A | 0.7 | 0.3 | 1.46 |
| A | 1.0 | 0.4 | 1.65 |
| B | n.m. | 0.1 | 1.36 |
| B | 1.6 | 0.2 | 1.80 |
| B | 2.2 | 0.3 | 2.30 |
| B | 3.1 | 0.4 | 2.53 |

n.m.=not measured.

Example 5
Comparison of the behaviour of four dispersions with respect to three coagulation media.

To that end use was made of the following dispersions:
a. without any additive;
b. 0.1% glyoxal;
c. 0.1% glyoxal and 0.02 M $CaCl_2$;
d. 0.1% glyoxal and 0.05 M $CaCl_2$.
The following coagulation media were tested:
1. 1.0 N NaOH solution;
2. saturated sodium sulphate solution containing 5% by weight of $Na_2CO_3$ and 5% by weight of $NaHCO_3$, pH=10 (from the literature);
3. $NH_3$ as gas.
Results:
All dispersions containing no glyoxal and no

$CaCl_2$ gave no technically useful results, irrespective of the coagulation media used.

Just about acceptable results were only obtained with dispersion b. only by using ammonia gas (3). Bath 2 did not lead to any acceptable results at all.

Compositions c. and d. gave good results both with the use of bath 1 and medium 3. Actually, bath 1 was to be preferred to medium 3.

Example 6
Preparation of artificial casing.

A dispersion containing 4% by weight of collagen, pH=3 (HCl), 0.02 M $CaCl_2$ and 0.1% by weight of glyoxal was extruded to form a tube in a horizontally positioned coagulation bath into which ended a vertically positioned extruder provided with an appropriate die. The extrudate was fed vertically upwards into the coagulation bath, which was a 1.0 N NaOH solution. The tube thus formed was neutralized with dilute hydrochloric acid and plasticized in a 2%-glycerol solution to which 0.2% of $NaHCO_3$ had been added. After drying, thermal hardening at 80°C and gradual cooling the tube was acclimatized at 25°C and 60% relative humidity.

The dry strength of the resulting artificial casing was 32 $N/mm^2$, measured in longitudinal direction, and 26 $N/mm^2$, measured in transverse direction. Dimensions of casing: 34 mm in cross-section, film thickness 53 microns.

Example 7
Digestibility of the casing obtained.

10 mg of pepsin were dissolved in a physiological salt solution and made up to 160 ml with hydrochloric acid of pH 3. A piece of 1 g of the casing obtained was immersed in this pepsin solution. The solution containing the casing was placed in an oven at 37°C. After 7 hours the piece of casing was found to have completely dissolved. It may therefore be concluded that the calcium and glyoxal to be used have no detrimental effect on the digestibility of the artificial casing.

**Claims**

1. A process of preparing shaped products starting from dispersions which contain at least one coagulable amphoteric high molecular substance by passing such a dispersion through an extruder equipped with a die into a coagulating bath which may be provided with electrodes and coagulating said dispersion by a change in pH such that the isoelectric point of the high molecular substance is passed, characterized in that polyvalent ions are added to the dispersion in such amounts that the final concentration in the dispersion is at least 0.005 molar of polyvalent ions.

2. A process according to claim 1, characterized in that in addition to the polyvalent ions a cross-linking agent for the coaguable, amphoteric high molecular substance is added to the dispersion, said cross-linking agent being inactive in the dispersion, but active while in contact with the coagulation bath.

3. A process according to claims 1 and 2, characterized in that the polyvalent ion added is calcium ion.

4. A process according to claims 1—3, characterized in that the cross-linking agent is a dialdehyde.

5. A process according to claim 4, characterized in that the dialdehyde used is glyoxal.

6. A process according to claims 1—5, characterized in that an acid collagen dispersion is used containing 0.01—0.2 gramme molecules of calcium ion per litre and 0.05—0.5% by weight of glyoxal.

7. A process according to claims 1—6 wherein the product obtained by extrusion is fed freely upwards directly from the extrusion die into the coagulation bath, characterized in that the coagulation liquid is separated from the extrusion die by a liquid which is inert both to the coagulation bath and to the product to be formed and is immiscible with and has a higher specific gravity than the coagulation liquid.

8. A process according to claims 1—7, characterized in that in the coagulation bath an electric direct current field is applied approximately perpendicular to the totally unsupported product herein formed.

9. A process according to claims 1—8 for the preparation of a sausage casing or like tubular product, characterized in that the extrusion die permits direct extrusion of a seamless cylinder which is optionally inflated during and after its being shaped and in the inflated state exposed to the action of a coagulating agent on its inside as well as on its outside.

**Patentansprüche**

1. Verfahren zur Herstellung geformter Produkte, ausgehend von Dispersionen, die mindestens eine koagulierbare, amphotere, hochmolekulare Substanz enthalten, durch Führen einer solchen Dispersion durch einen Extruder, der mit einem Mundstück versehen ist, in ein Koagulierbad, das mit Elektroden versehen sein kann, und Koagulieren der genannten Dispersion durch eine pH-Aenderung, so dass der isoelektrische Punkt des hochmolekularen Substanz überschritten wird, dadurch gekennzeichnet, dass man der Dispersion mehrwertige Ionen in solchen Mengen zusetzt, dass die Endkonzentration in der Dispersion mindestens 0,005—molar an mehrwertigen Ionen ist.

2. Verfahren nach Anspruch 1, dadurch gekennzeichnet, dass man der Dispersion zusätzlich zu den mehrwertigen Ionen ein Vernetzungsmittel für die koagulierbare, amphotere, hochmolekulare Substanz zusetzt, wobei das Vernetzungsmittel in der Dispersion inaktiv ist, aber aktiv ist, während es mit dem Koagulierbad in Berührung ist.

3. Verfahren nach Ansprüchen 1 und 2, dadurch gekennzeichnet, dass das zugesetzte mehrwertige Ion das Calciumion ist.

4. Verfahren nach den Ansprüchen 1 bis 3, dadurch gekennzeichnet, dass das Vernetzungsmittel ein Dialdehyd ist.

5. Verfahren nach Anspruch 4, dadurch gekennzeichnet, dass der verwendete Dialdehyd Glyoxal ist.

6. Verfahren nach den Ansprüchen 1 bis 5 dadurch gekennzeichnet, dass man eine saure Collagendispersion verwendet, die 0,01 bis 0,2 Gramm-Moleküle Calciumion pro Liter und 0.05 bis 0,5 Gewichtsprozent Glyoxal enthält.

7. Verfahren nach den Ansprüchen 1 bis 6, bei dem man das durch Extrusion erhaltene Produkt direkt aus dem Extrudermundstück frei aufwärts in das Koagulierbad fördert, dadurch gekennzeichnet, dass die Koagulierflüssigkeit von dem Extrudermundstück durch eine Flüssigkeit getrennt ist, die sowohl in Bezug auf das Koagulierbad als auch in Bezug auf das zu bildende Produkt inert ist und mit der Koagulierflüssigkeit nicht mischbar ist und eine höheres spezifisches Gewicht hat als die Koagulierflüssigkeit.

8. Verfahren nach den Ansprüchen 1 bis 7, dadurch gekennzeichnet, dass man in dem Koagulierbad ein elektrisches Gleichstromfeld angenähert senkrecht zu dem darin gebildeten, vollständig ungestützten Produkt anlegt.

9. Verfahren nach den Ansprüchen 1 bis 8 zur Herstellung einer Wursthülle oder eines ähnlichen schlauchförmigen Produktes, dadurch gekennzeichnet, dass das Extrudermundstück die direkte Extrusion eines nahtlosen Zylinders erlaubt, der gegebenenfalls aufgeblasen wird, während und nachdem er geformt wird, und in aufgeblasenem Zustand der Einwirkung eines Koaguliermittels auf seine Innenseite sowie auf seine Aussenseite ausgesetzt wird.

**Revendications**

1. Un procédé de fabrication d'objets formés à partir de dispersions contenant au moins une substance amphotère, coagulable, de poids moléculaire élevé, consistant à faire passer cette dispersion à travers une extrudeuse équipée d'une filière en direction d'un bain de coagulation qui peut être pourvu d'électrodes et à coaguler ladite dispersion par un changement de pH tel que l'on dépasse le point isoélectrique de la substance de poids moléculaire élevé, caractérisé en ce que des ions polyvalents sont ajoutés à la dispersion à des doses telles que la concentration finale des ions polyvalents dans la dispersion soit au moins 0,005 molaire.

2. Procédé selon la revendication 1, caractérisé en ce que, en plus des ions polyvalents, on ajoute à la dispersion un agent réticulant pour la substance amphotère coagulable, de poids moléculaire élevé, ledit agent réticulant étant inactif dans la dispersion, mais actif lorsqu'il se trouve en contact avec le bain de coagulation.

3. Procédé selon les revendications 1 et 2, caractérisé en ce que l'ion polyvalent est l'ion calcium.

4. Procédé selon les revendications 1 à 3, caractérisé en ce que l'agent réticulant est un dialdéhyde.

5. Procédé selon la revendication 4, caractérisé en ce que le dialdéhyde employé est le glyoxal.

6. Procédé selon les revendications 1 à 5, caractérisé en ce qu'on utilise une dispersion de collagène acide contenant 0,01 à 0,2 molécule-gramme d'ion calcium par litre et 0,05 à 0,5% en poids de glyoxal.

7. Procédé selon les revendications 1 à 6, dans lequel le produit obtenu par extrusion est librement dirigé vers le haut, directement à partir de la filière d'extrusion, en direction du bain de coagulation, caractérisé en ce que le liquide de coagulation est séparé de la filière d'extrusion par un liquide qui est inerte à la fois vis à vis du bain de coagulation et de l'objet à former, non miscible avec celui-ci et possède une densité supérieure à celle du bain de coagulation.

8. Procédé selon les revendications 1 à 7, caractérisé en ce que, dans le bain de coagulation, un champ électrique continu est appliqué à peu près perpendiculairement à l'objet entièrement sans support formé ici.

9. Procédé selon les revendications 1 à 8 pour la fabrication d'un boyau synthétique pour saucisse ou d'un objet tubulaire similaire, caractérisé en ce que la filière d'extrusion permet l'extrusion directe d'un cylindre sans soudure qui est éventuellement gonflé avant et après son façonnage et soumis, à l'état gonflé, à l'action d'un bain de coagulation aussi bien à l'intérieur qu'à l'extérieur.